# EUROPEAN PATENT APPLICATION

(11) **EP 4 521 603 A1**
(43) Date of publication of application: **12.03.2025**
(21) Application number: 23386087.3
(22) Date of filing: 08.09.2023
(51) Int. Cl.: H02K 1/14, H02K 1/18, H02K 15/02, H02K 5/20, H02K 55/00

(54) **SEGMENTED STATOR ARRANGEMENT**

(71) Applicant: GKN Aerospace Services Limited, Shirley, Solihull B90 8BG (GB); The University of Manchester, Manchester M13 9PL (GB)
(72) Inventor: ALARCON, Vicente Climente, Solihull, B90 8BG (GB); ZHAO, Chuanli, Solihull, B90 8BG (GB); MANOLOPOULOS, Charalampos, Solihull, B90 8BG (GB); COPUS, Matthew, Solihull, B90 8BG (GB); IACCHETTI, Matteo, Manchester, M13 9PL (GB); SMITH, Sandy, Manchester, M13 9PL (GB)
(74) Representative: D Young & Co LLP

(57) **Abstract**

The present invention relates to a repeatable unit for a segmented stator for an electric machine, the unit comprising: a back-iron stator segment; a stator tooth segment comprising a top portion, a main body portion and a base portion; and a connection portion for connecting the back-iron stator segment to the stator tooth segment, wherein the base portion of the stator tooth segment has a width that is greater than a width of the top portion and the width of the main body portion, wherein, in use, a furthest radial distance of the back-iron stator segment is broadly the same as a furthest radial distance for the stator tooth segment.

## Description

### Technical Field

The present invention is concerned with electrical propulsion systems and the removal of undesirable heat build up during the operation of electric machines of such propulsion systems.

Segmented stators are known as a cost effective way to manufacture stators. Less waste material is discarded in the formation of segmented stators compared to wholly-stamped laminated stators. There is a current movement towards greener air travel. Electric motors are a promising avenue for green air travel however there are drawbacks associated with power output when compared to typical combustion-based air travel. Use in electric motors of high-grade electrical/laminated steel is advantageous and therefore reducing wastage of such material is advantageous.

Conventional segmented stators may be formed in a number of ways. In one example, I-shaped stator segments may be jointed together circumferentially, in another example back-iron stator segments may be jointed to at least one stator tooth segment. Both of these methods have limitations and drawbacks that the present invention seeks to overcome.

For a typical back-iron segmented stator, conventional designs often have the stator tooth segments jointed radially inwards on the back-iron segments. The back-iron stator segments are then jointed together circumferentially. There may be an equal number of back-iron stator segments and stator tooth segments, i.e. each back-iron stator segment may be jointed to a single corresponding stator tooth segment; alternatively, each back-iron stator segment may comprise a plurality of stator tooth segments when jointed together. Generally, the joint will be a tensile-force-resisting joint, i.e. the joint will form a constraining/locking mechanism to stator segments in all planar directions. In an example, a dovetail shape joint, wherein a force to pull apart the two jointed segments is resisted by the joint's own geometry.

For an I-shaped segmented stator, the radial thermal contact and related barrier/resistance does not exist, somewhat alleviating the tolerance error and entirely removing the radial thermal barrier. However, in some arrangements, circumferential joints may introduce tolerance errors.

Electrical propulsion systems have many benefits over combustion propulsion systems, particularly in relation to chemical emissions and the like. It is widely seen that electrical propulsion systems may render transport as more viable in a long term perspective.

There are however a number of problems inherent in the use of electrical propulsion over traditional combustion propulsion systems. In an attempt to increase the viability of electrical propulsion, attempts have been made to overcome such problems. We provide herein a further advancement in this area.

Herein there is provided an improved segmented stator arrangement that is viable for use in green motive systems.

### Summary of the Invention

Aspects of the invention are set out in the accompanying claims.

In accordance with some embodiments described herein, there is provided a repeatable unit for a segmented stator for an electric machine, the unit comprising: a back-iron stator segment; a stator tooth segment comprising a top portion, a main body portion and a base portion; and a connection portion for connecting the back-iron stator segment to the stator tooth segment, wherein the base portion of the stator tooth segment has a width that is greater than a width of the top portion and the width of the main body portion, wherein, in use, a furthest radial distance of the back-iron stator segment is broadly the same as a furthest radial distance for the stator tooth segment.

The radial distance homogeneity allows for a well-formed and structurally robust arrangement for the stator formed from a plurality of the repeatable unit disclosed herein. Furthermore, the arrangement of the tooth portion allows for a coil to be preformed and positioned via the top of the tooth while being secured *in situ* between the wider base portion and the connected back-iron stator segments.

In examples, the connection portion is arranged broadly along a radial direction. In this way, there is an unbroken thermal path for the tooth portion to an external environment from the stator core. In this way, thermal control is easier and overheating is reduced. By reducing overheating, the likelihood of damage to the materials in the stator is reduced and the stator has a longer lifetime.

In accordance with some embodiments described herein, there is provided a segmented stator for an electric machine, the segmented stator comprising: a plurality of repeatable units as described herein, wherein the repeatable units are arranged such that back-iron stator segments and tooth segments alternate around a circumference of the segmented stator.

The segmented stator herein is robust structurally and is more easily manufactured than present systems. The stator is easily used with preformed coils which allows for sensitive or delicate coils to be preformed and introduced prior to formation of the stator. This avoids the delicate matter of arranging the coil when the stator is fully formed.

In accordance with some embodiments described herein, there is provided a method of manufacturing a segmented stator for use in an electric machine, comprising: preforming at least one coil for use in the segmented stator; positioning at least one coil onto at least one stator tooth segment; securing the at least one stator tooth segment to a corresponding at least one back-iron stator segment via a connection portion to form a repeatable unit; and, joining a plurality of repeatable units to form a segmented stator.

### Brief Description of the Drawings

One or more embodiments of the invention will now be described, by way of example only, and with reference to the following figures in which:
Figure 1 shows a schematic view of a stator;
Figure 2 shows a schematic view of a segmented stator;
Figure 3a shows a schematic view of a segmented stator according to an example of the present disclosure;
Figure 3b shows a schematic view of portion A of Figure 3a;
Figure 3c shows a schematic view of portion A of Figure 3a;
Figure 4 shows a schematic view of portion B of Figure 3b;
Figure 5 shows a schematic view of a tooth segment of a segmented stator according to an example of the present disclosure;
Figure 6 shows a schematic view of an interface between a tooth segment and a back-iron stator segment;
Figure 7a shows a schematic view of a portion of a segmented stator;
Figure 7b shows a schematic view of a portion of a segmented stator according to an example of the present disclosure;
Figure 8 shows a flow chart of a method of forming a segmented stator; and,
Figure 9 shows a schematic view of a segmented stator with partial close ups of the stator according to an example of the present disclosure.

Any reference to prior art documents in this specification is not to be considered an admission that such prior art is widely known or forms part of the common general knowledge in the field. As used in this specification, the words "comprises", "comprising", and similar words, are not to be interpreted in an exclusive or exhaustive sense. In other words, they are intended to mean "including, but not limited to". The invention is further described with reference to the following examples. It will be appreciated that the invention as claimed is not intended to be limited in any way by these examples. It will also be recognised that the invention covers not only individual embodiments but also combination of the embodiments described herein.

The various embodiments described herein are presented only to assist in understanding and teaching the claimed features. These embodiments are provided as a representative sample of embodiments only, and are not exhaustive and/or exclusive. It is to be understood that advantages, embodiments, examples, functions, features, structures, and/or other aspects described herein are not to be considered limitations on the scope of the invention as defined by the claims or limitations on equivalents to the claims, and that other embodiments may be utilised and modifications may be made without departing from the spirit and scope of the claimed invention. Various embodiments of the invention may suitably comprise, consist of, or consist essentially of, appropriate combinations of the disclosed elements, components, features, parts, steps, means, etc, other than those specifically described herein. In addition, this disclosure may include other inventions not presently claimed, but which may be claimed in future.

### Detailed Description

An invention described herein relates to generating propulsion for a vehicle via an electrical machine. Alternatively or additionally, an invention described herein relates to generating electrical power for a vehicle via a generator or the like. The electrical power may be at least partially the power source for the propulsion for the vehicle.

Applications for this system therefore may include automotive, space, domestic or commercial and so forth.

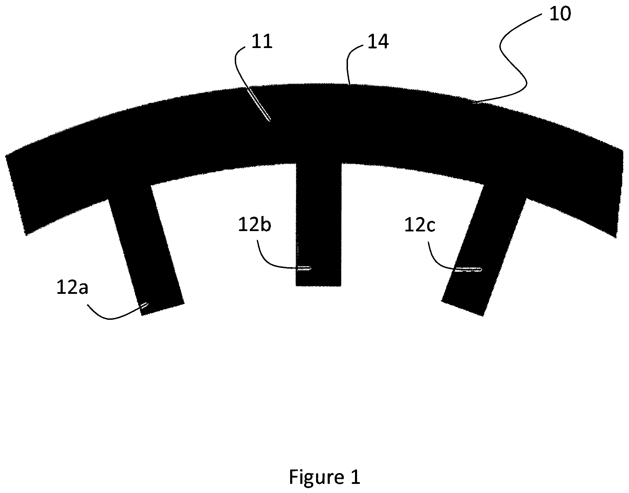

Referring to Figure 1, there is shown a schematic view of a stator 10. The stator 10 is not a segmented stator. The stator 10 has a main body portion 11 connecting to teeth portions 12a, 12b, 12c. The stator 10 in use would be in a complete circular (or similar) form. For clarity, only a portion of the stator 10 is shown in Figure 1. The stator 10 has a back-iron portion 14 which is the outermost (from a radial consideration) portion of the stator 10.

In use, in an electric motor, a stator provides a rotating magnetic field for driving a rotating rotor. In a generator, a stator converts a rotating magnetic field to electric current. In fluid powered devices, a stator guides the flow of fluid to or from a rotating portion of the system.

In the example shown, there is thermal communication between the teeth portions 12a, 12b, 12c and the back-iron portion 14.

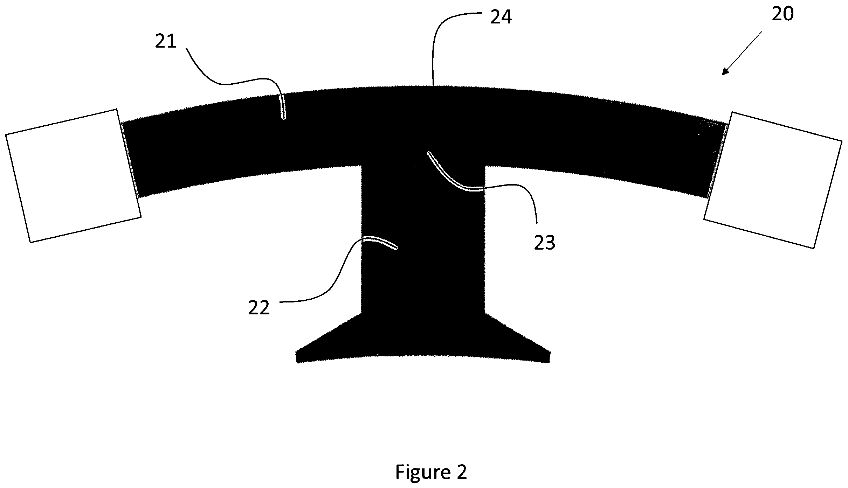

Referring to Figure 2, there is shown a schematic view of a segmented stator 20. A segmented stator 20 may have a tooth portion and a main body portion that are not physically one piece but rather formed of more than one piece and use a connection in some manner to link the pieces. In the example shown in Figure 2, the stator has a body portion 21 and a tooth portion 22. The stator 20 may have many teeth or tooth portions - in this example only one is shown. The stator 20 may have many body portions - in this example only one is shown. The tooth portion 22 is connected to the main body portion 21 via connection portion 23. The connection portion 23 in the example of Figure 2 is a dovetail joint between the body portion 21 and the tooth portion 22.

In Figure 2, the stator tooth segment 22 is jointed to the back-iron stator segment 21. A radial thermal contact is created between the two segments 21, 22, i.e. thermal energy can pass from portion 22 to portion 21. The radial thermal contact may be radially disposed away from the outer extremities of the formed stator (back-iron portion 24). The radial thermal contact (i.e. the connection at connection portion 23) introduces a thermal barrier, thereby reducing the efficiency of heat dissipation from the stator to its radial extremities. However, the connection portion 23 is a robust and effective joint which allows the tooth portion 22 to be reliably and robustly connected to the main body portion 21. In operation, a stator (of any configuration) is heated by magnetic hysteresis and induced eddy currents, such that heat dissipation to its radial extremities is desired. The arrangement herein may have a cooling element arranged in such a location (in a radially distal position) and the present arrangement therefore provides rapid and effective radial cooling to the cooling element arranged around an outer edge of the arrangement. The arrangement herein effectively provides a highly effective thermal path to the radially distal position to reduce temperature rise in the stator core.

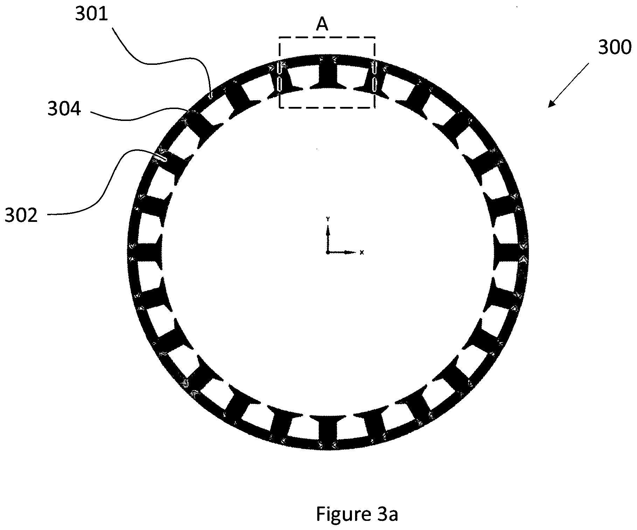

Referring now to Figure 3a, there is shown a schematic view of a segmented stator 300 according to an example of the present disclosure. The segmented stator 300 in the example shown is a circular structure. The segmented stator 300 has a plurality of main body portions 301 and a plurality of tooth portions 302. The tooth portions 302 can be seen to project inwardly from the outer extremity 304 of the stator 300. The outer extremity is the back wall 304 of the stator 300 and, in the example shown, is formed in part by the main body portions 301 and in part by the tooth portions 302. The back wall 304 forms the circular structure from which the tooth portions 302 project inwardly.

A stator may have a number of tooth portions 302 and main body portions 301 as is appropriate considering the physical arrangement and the winding definition. In an example, a smaller arrangement may have around 15 to 20 tooth portions 302 while a larger arrangement may have around 20 to 30 tooth portions 302. A stator may have a number of main body portions 301 as corresponds to a suitable number considering the number of tooth portions 302. In the example of Figure 3a, the stator has 24 tooth portions 302 and 24 main body portion 301.

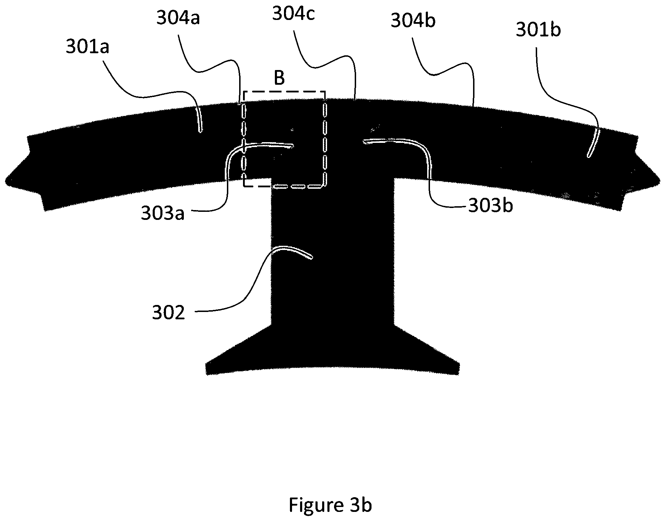

Referring now to Figure 3b, there is shown an enlarged simplified view of portion A from Figure 3a. The enlarged view shows one tooth portion 302 and two main body portions 301a, 301b. The rear wall portion in the portion shown is formed of rear wall portion 304a (from main body portion 301a), rear wall portion 304b (from main body portion 301b), and rear wall portion 304c (from tooth portion 302). In contrast to the arrangement of Figure 2, a portion of the tooth portion 302 formed the rear wall portion 304.

In the arrangement shown in Figure 3b, the tooth portion 302 is connected to main body portions 301a, 301b by connections 303a, 303b respectively. The connections are shaped in a pyramid-like shape with triangular projections jutting into corresponding recesses. In the example shown the projections form part of the main body portions 301a, 301b and project into recesses in the tooth portion 302. This arrangement has been found to be highly robust and reliable against various stresses as well as highly thermally conductive for the tooth portion 302.

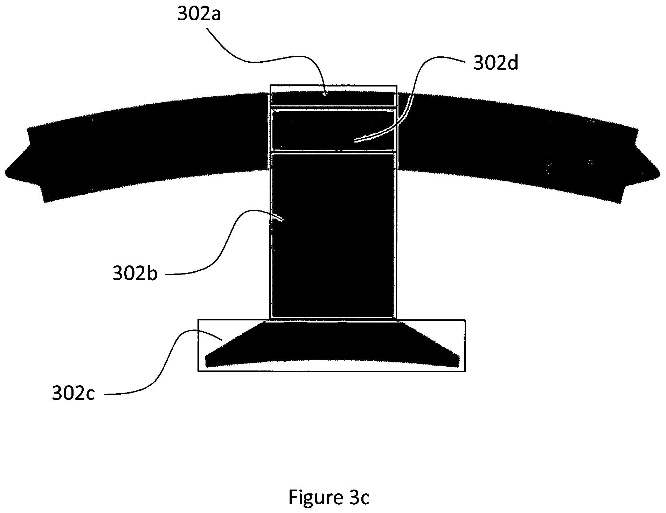

Referring now to Figure 3c, there is shown an enlarged simplified view of portion A from Figure 3a. The arrangement in Figure 3c is that of Figure 3b with some portions of the tooth portion 302 identified. The tooth portion 302 has portions 302a, 302b, 302c, 302d. The top portion 302a is the radially most distanced (or distal) portion of the tooth portion 302. This language is used to indicate radially distanced in relation to the centre of the arrangement shown in Figure 3a. Accordingly, portion 302b is a middle portion while portion 302c is a bottom portion. The portion 302d wherein the connections 303a, 303b (of Fig 3b) are arranged is therefore towards a radial distal end (portion 302a) compared to the radially proximal end (portion 302c). Portion 302d may be seen as the connection portion section of the tooth portion 302.

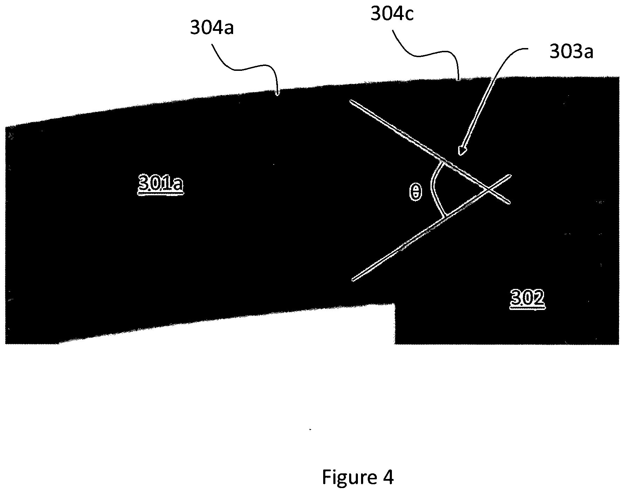

Referring now to Figure 4, there is shown a schematic view of portion B of Figure 3b. The main body portion 301a is shown in situ with the tooth portion 302. The connection portion 303a is shown. There is an angle θ shown. It has been found by the inventors that an angle θ in the range of 20 to 160 degrees is particularly advantageous. It has been shown that this angle is particularly advantageous due to the tolerances involved in the structure of the join shape shown. The present arrangement, in particular the shape of the connection portions between the main body portions and the tooth portions, maintains the radial position of the rear wall at a homogeneous distance from the centre. Very high levels of uniformity are advantageous for the rear wall positioning and therefore it is important that the connection provides reliable positioning alongside a robust connection.

Preferably, a small (or no) airgap is better for the electromagnetism considerations, so tolerance within the join is crucial. A flat join is feasible but this increases the manufacturing difficulty by virtue of removing the "guiding effect" of the joining means being shaped. The angle may be optimised to provide a radial slip-preventing force, without incurring shear/deformation forces. The join shape shown has been found to be a balance of many desirable aspects for the arrangement. The "V-shape" join is therefore particularly advantageous.

In a preferred example, the angle is an acute angle. An acute angle may improve the magnetic path due to more contact surface and the thermal path. Contrarily, such an arrangement may induce a greater amount of stress (both flexural and concentration) in the cantilever tips of the mortise. As such, a balance can be struck by the user to optimise the arrangement for their arrangement.

The arrangement may include a radial array of projection/recess pairs, for example two or even three, with less depth. This may be referred to as an arrangement of micro projection/recess pairs. In an example, these may be an arrangement of tenon/mortise "V" pairs.

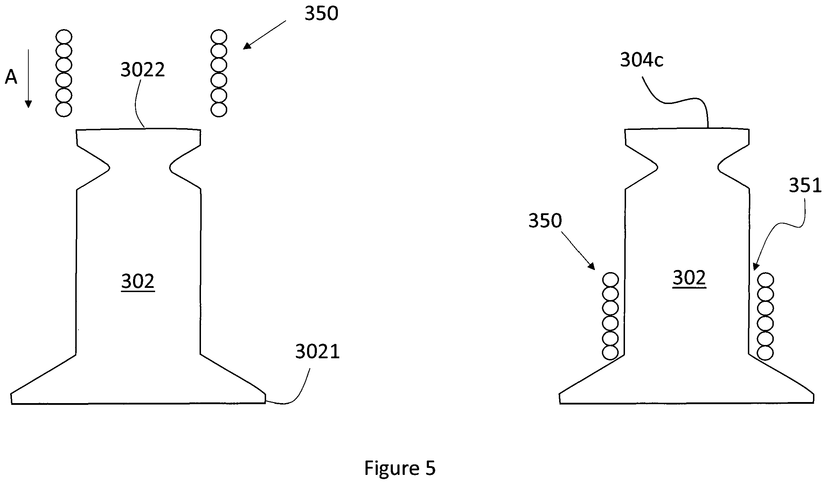

Referring now to Figure 5 there is shown an example of a tooth portion with a coil. On the left hand side of Figure 5 there is shown a pre-formed coil 350 that is to be inserted onto the tooth portion 302. The coil 350 is therefore pre-formed, under conditions that can be controlled to far greater extents than for winding coils in situ, and inserted, from above, onto the tooth portion 302. The coil 350 is moved in the direction indicated by arrow A.

The tooth portion 302 has a wider base portion 3021 than the upper portion 3022. Between the top portion 3022 and the base portion 3021 is a main body portion of the tooth portion 302. In this way, the coil 350 being inserted onto the coil 302 via the direction indicated by arrow A is a secure method of installing the coil 350. As the coil 350 is moved onto and down the tooth portion 302, the coil is prevented from falling off the tooth portion 302 by the wider base portion 3021. On the right hand side of Figure 5 the coil 350 can be shown installed on the tooth portion 302 securely. The coil 350 may rest against an upper side of the base portion 3021.

Furthermore, the width of the upper portion 3022 is the same width as that of the portion on which the coil will rest when in situ. This allows an ease of installation when putting the coil onto the tooth portion. Such an arrangement can also allow a controlled distance to be present between the tooth portion 302 and the coil 350 throughout installation and use. As such, the arrangement as per Figure 5 is particularly advantageous when installing a preformed coil 350 onto a tooth portion 302. The coils may, in examples, be maintained at cryogenic temperatures (or the like). In contrast, the stator is not cryogenically cooled but rather cooled somewhat by a cooling arrangement (discussed more later). With the difference in these temperatures, it is advantageous to include some form of thermal insulation between the coil 350 (cryogenically cooled) and the tooth portion 302 (not cryogenically cooled). In this way, therefore, a gap 351 being present between the coil 350 and the tooth portion 302 is highly useful. The use of thermal insulation in this gap may be highly advantageous in maintaining the separate temperature regimes.

The arrangement of the tooth portion 302 is therefore advantageous in having a narrower top portion to the base portion for the installation of the coil 350. This is synergistic with the advantage that coils can be made and pre-formed prior to installation on the tooth portion 302. Many modern systems use in situ winding of coils. However, for use in particularly high power electric engines, pre-forming coils is of significant advantage.

It is noted that materials advantageous for the use in the present system include e.g. high purity aluminium. Such wires may be formed around the tooth portion *in situ* where desired. While the present arrangement is benefitted from enabling preforming coils, *in situ* formed coils are available for use in the present arrangement.

The present arrangement also benefits from operating in a vacuum due to favourable thermal energy management with cryogenic temperatures for the coils and non-cryogenic for the stator. Thermal transfer across the gaps between elements in a vacuum is difficult and therefore the coils may more easily be maintained at highly conductive cryogenic temperatures, while the stator can be maintained at non-cryogenic temperatures. The use of cryogenic temperatures is advantageous for other aspects (electrical conductivity and thermal control of the coils etc) and therefore use of a vacuum is overall advantageous.

In particular, the coils used in high power electric machines are of extremely high purity metal and may be used with cryogenic substances and at extremely low temperatures. Each of these factors increases the electrical efficiency of the arrangements herein and therefore improves the power output of the electric machines. The coils used herein may therefore be coils that are made of particular materials, may have insulation or the like, and therefore preforming is significantly advantageous in improving the overall electrical efficiency of the arrangement of the stators shown herein.

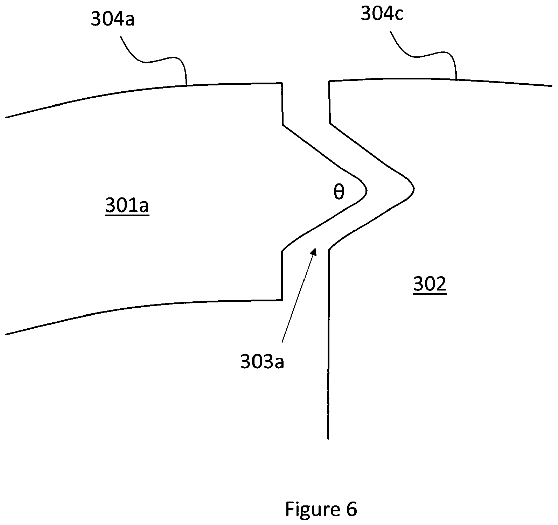

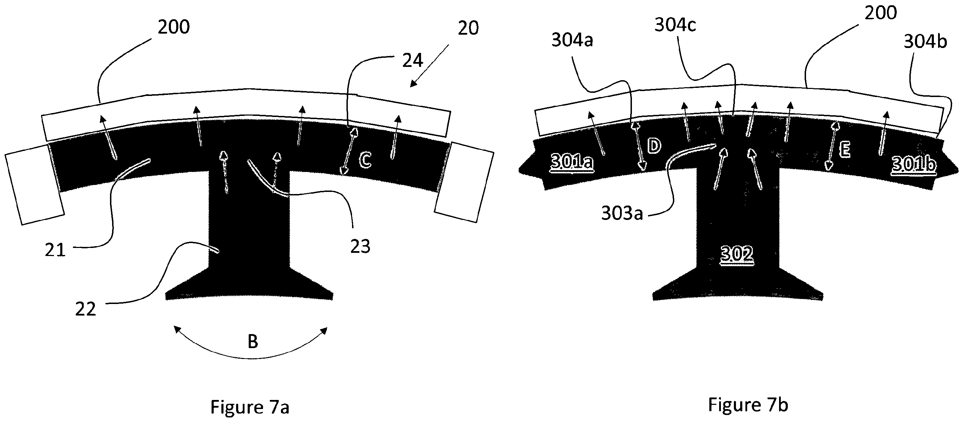

Referring now to Figure 6, there is shown a schematic view of an interface between a tooth segment 302 and a main body portion 301a. In the example, there is a gap present between the main body portion 301a and the tooth portion 302. The pieces are brought together to close the gap prior to forming the stator shown in earlier examples. The rear wall portions 304a, 304c are also indicated. The various rear wall portions align so as to provide a smooth surface when fully constructed. A "smooth surface" indicates that the radial position of the tooth portions and the main body portions are arranged homogenously. This is advantageous for a number of reasons. In the joining of the main body portion 301a and the tooth portion 302 there may be a gap that is left between the portions in the connection portion 303a. This may provide for a conforming contact between the flat surfaces. There may be a slight gap in the connection portion 303a between the main body portion 301a and the tooth portion 302. Engaging fully between the two portions can lead to a reduced airgap which provides for more advantageous electromagnetic properties of the stator. In the present arrangement, as will be discussed with reference to Figs 7A and 7B, thermal transfer is radial and therefore transfer across the gap is less important than in prior arrangements, such as shown in Figure 2.

In an example, the angle of the recess (e.g. mortise) may be smaller than the angle of the projection (e.g. tenon). This has been found to be more favourable for an equal contact pressure and uniform contact.

Referring now to Figure 7a and 7b there are shown examples of segmented stator portions.

In Figure 7a there is shown a segmented stator 20 formed as per the example shown in Figure 2. The stator has a dovetail connection 23 linking the tooth portion 22 to the main body portion 21. The main body portion 22 therefore is the only portion that provides the outermost surface of the stator 24. In the example in Figure 7a, the stator 20 is surrounded by a cooling system 200. The cooling system may be a water jacket or the like that is shrunk onto the stator 20 to assist in removing thermal energy from the stator 20. The water jacket 200 may be a ring that applies a radially inward pressure to the stator 20. The ring may be an integrated pressure ring. Alternatively, or additionally, the jacket 200 may have or be a carbon fibre tape or the like. Such a tape (or similar) would provide a radially inward tension.

Thermal energy removal from the main body portion 21 is effective. This is shown by the full-line single-arrow lines. There is a direct thermal path from the main body portion 21 to the source of cooling 200. In comparison, the path from the tooth portion 22 to the main body portion 21 is broken, by virtue of the connection portion 23. The thermal energy transfer is therefore less effective and shown by the dotted-line single-arrow lines. The homogeneity of the radial position of the rear wall portion 24 is very good by virtue of the rear wall being formed only from the main body portion 21. This is set by the width of the main body portion 21, this is shown by double-ended arrow line C. The arrangement herein therefore provides direct thermal energy transfer from both the tooth portions 302 and the main body portions 301.

The connection portion 23 in Figure 7a may lead to vibrations in the tooth portion 22 as shown by the double-ended arrow line B. Vibrations, collisions or impacts that lead to left-right vibrations (as shown in Figure 7a) could lead to a movement of the tooth portion 22 as per the double-ended arrow line B (a "left right" transverse motion). This may further impact the effectiveness of thermal energy transfer from the tooth portion 22 to the main body portion 21 due to the movement leading to an air gap being present between the tooth portion 22 and the main body portion 21. Arrangements herein solve drawbacks of the arrangement shown in Figure 7a.

The arrangement of Figure 7b is an arrangement according to an example of the present disclosure. The segmented stator of Figure 7b has two main body portions 301a, 301b either side of an upper portion of tooth portion 302. The tooth portion 302 is connected to the first main body portion 301a by connection portion 303a. The connection portion 303a is the same structure (broadly) as that shown in earlier examples.

The rear wall portions are broadly level. Specifically there is great radial homogeneity between the two radial positions of portions 304a, 304b for the main body portions 301a, 301b respectively and the radial position of the portion 304c of the tooth portion 302 are maintained for great homogeneity (see double ended arrows D and E for the two main body portions, where it can be seen that the rear wall position of the tooth portion is also the same). Advantageously this allows for excellent thermal transfer from these portions 304a, 304b, 304c to the source of cooling (e.g. water jacket) 200 which may be located onto the outer surface of the stator. There is a better overall thermal path (from tooth to cooling source) in the arrangement of Figure 7b than in the arrangement of Figure 7a. In an example, the cooling source 200 is shrunk wrapped onto the outer surface of the stator. As noted above, the cooling source 200 may include a compression element such as a compression ring or the like to provide radial compression onto the stator. The compression advantageously tightens the joints and holds the arrangement in the correct position. In comparison to the example shown in Figure 7a, there is a direct thermal path from the main body portion 301a, the tooth portion 302 and the main body portion 301b to the source of cooling 200. These direct thermal paths are shown by the plurality of full-line single-arrow lines from the tooth portion and main portions to the cooling sources 200.

This shows that there is a continuous conduction passage from any portion in the segmented stator to the cooling jacket. This is highly advantageous for high power electrical machines that are advantageously cooled.

As mentioned above, cryogenic temperatures for the coil allow for very high currents to be used and therefore very large electrical power outputs to be provided by the electrical machine. However, the stator is maintained at cooled (but not cryogenic temperatures) and the arrangement uses a vacuum to allow the stator to be easily maintained at such temperatures more effectively. The arrangement may have gaps (as discussed above) between the coil and the stator. This may include thermal insulation and/or clips to provide a space between the coils and the segments and, later in construction, allow insertion of cryogenic insulation to reduce heat flow from the 'warm' segments to the cryogenically cooled coils.

While other shapes of arrangements are envisaged, the arrangement shown in Figure 3a and 7b, has advantageous mechanical stress properties. This segmented arrangement may use a pressure ring around the back of the stator (as per element 200 of Figure 7b) that provides a predetermined "hoop" stress. The hoop stress tightens and aligns all the segments making good thermal connection around the joints 303a.

A pressure ring per se is not shown separately from the element 200 though there may be separate components for the compressive element and the cooling element. The ring may be one piece or a series of separate pieces that provide compression. In an arrangement, the cooling element is a water jacket provided at the outer surface of the stator for cooling. In an example, the cooling element is integrated with the stress ring to provide both cooling and shrink fit. Use of a tight shrink fit may also provide a good thermal contact between the cooling element and the stator core. The design of the segments then provides a clear and uninterrupted thermal path from the stator to the cooling element. This clear path is therefore an advantageous improvement over the arrangement shown in Figure 7a.

The compressive element may take any reasonable form. Tapes or the like are similarly effective as a ring. The compressive element assists in forming tight contact over the large proportion of the joint surface area 303a under the hoop stress. Again, this stress may be provided from the compressive element alone or from a combined cooling and compressive element such as a shrink fit water jacket/pressure ring. Such stress is advantageous as it does not jam or allow the tooth portion to move under the electromagnetic forces of the machine. Therefore performance is significantly improved.

Furthermore, this is also highly advantageous in arrangements that rely primarily on conduction to move thermal energy from an area of high thermal energy to an area of low thermal energy. For example, this benefit becomes particularly advantageous in vacuum conditions. The present arrangement may have components arranged to operate at cryogenic temperatures. As such, the present arrangement improves the thermal conduction throughout the stator to the cooling source 200 to synergistically improve the overall effectiveness of the arrangement in allowing use of high electrical loads. In the present invention, there are no connection points 303a that impair the heat flow path from the tooth portions to the outer surface 304a, 304b, 304c of the stator.

Figure 7b clearly shows that the thermal path is not impaired. This is particularly of use in the consideration of the setting of the stator in a vacuum. Heat transfer in a vacuum uses conduction and this arrangement enables reliable and fast conduction of thermal energy through the stator. The arrangement provides for a robust defence in the stator against thermal runaway by virtue of both the direct thermal paths through the stator and the cooling sources 200. At higher conventional temperatures, the stator is far more likely to experience thermal runaway and therefore, in the present arrangement, this risk is strongly mitigated.

The connection portion 23 of Figure 7a can be seen as a broadly transverse connection portion while the connection portions 303a, 303b of Figure 7b can be seen as a broadly radial connection portion. This is the case as the connection portion 23 of Figure 7a generally projects across the transversal direction of the stator, while the connection portion 303a, 303b of Figure 7b generally projects broadly parallel along the radial direction of the stator. In other words, the connection portion 23 of Figure 7a generally traces a profile across the transversal direction of the stator, while the connection portion 303a, 303b of Figure 7b generally traces a profile broadly parallel along the radial direction of the stator. In further other words, as shown in Fig 7a, the connection joint is broadly left to right (across the radially outward direction of travel of thermal energy). In contrast, as shown in Fig 7b, the connection joint is broadly top to bottom (aligned with the radially outward direction of travel of thermal energy). In this way, the connection joint in the arrangement in Figure 7b impairs the transfer of thermal energy less than in Figure 7a. This is because the thermal energy need not pass a joint (which are less thermally conductive due to air gaps and the like).

The connection portion of Figure 7b also reduces the movement of the tooth portion 302 in response to vibrations, collisions or impacts or the like. The tooth portion 302 has a greater portion of the tooth secured by the main portions 301a, 301b when compared to the arrangement in Figure 7a. As such, the tooth portion 302 is more resilient against the transverse "left right" motion as shown in Figure 7a. The stator is therefore more robust overall.

The projections and recess in the connection portion shown in Figure 7b, project and are arranged broadly along a circumferential axis of the segment stator. In contrast, the projection in Figure 7a is arranged along a radial axis of the stator.

In the arrangement of Figure 7b, the segmented stator has a connection portion 303a, 303b that allows for:
(i) highly robust arrangement that allows for highly homogenous radial positioning of the various back wall segments 304a, 304b, 304c;
(ii) the homogeneous radial positioning allows for a cooling source to be shrunk wrapped effectively onto the stator and improves the cooling provided to the stator, which is advantageous in high power electric machines that operate at low temperatures;
(iii) radial compression also operates to secure joint and stator portion positions;
(iv) highly effective direct thermal energy transfer from all segments 301a, 301b, 302 to the cooling source 200;
(v) the thermal transfer is via conduction which is highly effective in low pressure or vacuum conditions, as may be the case for high power electric machines that operate at low temperatures for high electrical efficiencies;
(vi) the joint between the tooth portion 302 and the main body portions 301a, 301b is secure and reduces the likelihood of any transverse movement of the tooth portion; and,
(vii) highly specialised coils can be pre-prepared and inserted onto the tooth portion from above prior to the segmented stator being constructed, this allows the coils to be formed in more specialist conditions and therefore improves the homogeneity of the coils and allows for highly refined materials to be used in the construction of the coils.

All of the above features synergistically improve the total electrical efficiency that can allow operation at a higher power of the electrical machine of Figure 7b. The use of cryogenic temperatures, highly specialised coils, advantageous thermal removal in vacuum conditions provide increased electrical power handling. The present arrangement therefore is particularly advantageous in use for electrical engines that wish to provide green air travel on a large-scale commercial level.

Segmentation allows greater flexibility in the assembly of the motor. From a manufacturing perspective, new design features can be considered. In the present disclosure, these design features allow performance enhancements in various ways.

The base of the tooth portion 302 is wider than the rest of the tooth portion 302. The width of the tooth portions base (or feet) are relate to desirable magnetic performance for the overall motor design. It may be desirable for the airgap to be small, nonetheless an airgap is used herein advantageously to prevent magnetic "short-circuiting". Due to the tight nature of the coil windings, the arrangement herein does not allow coils to be provided onto the tooth portion via the base. While the base of the tooth portions could be small or flat, this would not be advantageous for the torque requirements etc of the motor. Therefore, while the present arrangement provides a highly efficient electrical machine on the one hand, it simultaneously provides a manufacturing method that permits the use of pre-formed coils without sacrificing electromagnetic performance by reducing the width of the teeth feet (both of which would not be possible in conventional stators). As such, the present arrangement shows an advantageous arrangement balancing various aspects of consideration for an electric motor desired for operating at very high efficiencies.

Thus, the teeth feet are wider by virtue of our design requirements - and the preformed coil will not be secured onto the teeth feet.

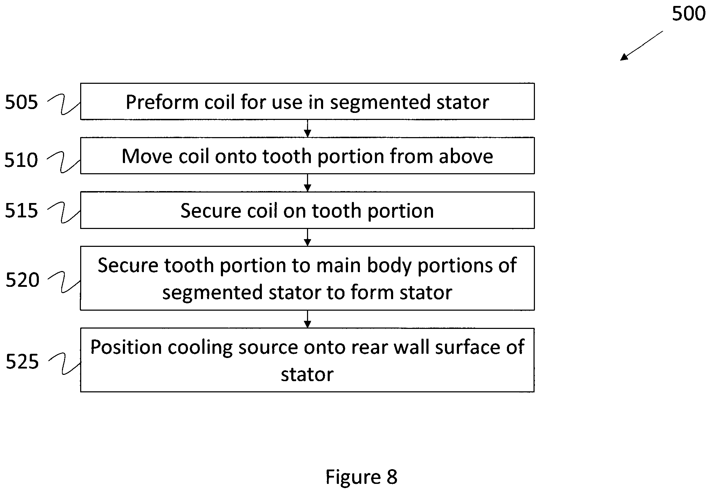

Referring now to Figure 8, there is shown an example of a flow chart of a method for forming a segmented stator according to the present disclosure. The method 500 comprises preforming a coil for use in the segmented stator 505. This step may be repeated many times per coil for use in the stator. This step may be performed at any point prior to securing the tooth portion of the stator to the main body portions.

In step 510, the preformed coil is moved into position on the tooth portion. This movement preferably takes place from above the tooth portion, as per Figure 5. This is because the base portion of the tooth portion is wider than the top portion. Furthermore, the top portion may be the same width (or similar width) to the portion on which the coil rests when in situ to allow for a good connection between the coil and the tooth portion.

In step 515, the preformed coil is secured onto the tooth portion. This may be by virtue of use of thermally insulating clips securing the coil onto the main body of the tooth portion. In this way, the coil is prevented from moving when in use and the arrangement is therefore robust and reliable.

In step 520, the tooth portion, with coil in situ, is secured to the main body portion of the stator. This involves connecting the portions via the connection portions, e.g. portions 303a, 303b of Figure 7b. The main body portions may be slid or pushed into connection with the recesses of the tooth portion. There may be a slight gap at the end of the connection portion as described above. The connection between the portions should be reliable and robust and preferably without points that are vulnerable to mechanical stress (such as torsional movements).

In step 525, the segmented stator is formed with coils on the tooth portions. The cooling source is then positioned onto the rear wall surface of the stator. In this way, a cooling source can be provided to assist the stator in removing thermal energy. This is advantageous, as discussed above, for maintaining the stator at cooled temperatures. Cooled temperatures may be around 120 to 150 degrees Celsius. It is preferred to operate below a temperature at which iron laminations are outgassed. As such, we may wish to operate around 20 degrees Celsius below such a temperature which may occur around 200 degrees Celsius or so. Such temperatures are advantageous in turn for use of the stator because too high temperatures may burn the adhesive between laminations.

The method leads to a segmented stator that is able to process extremely high electrical loads which in turn improves the viability of large scale commercial electrical air travel.

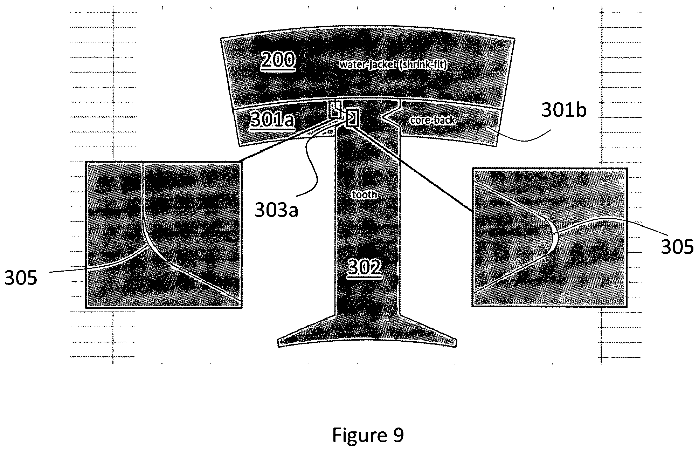

Referring to Figure 9, there is shown an example of a stator having a tooth portion 302 connected to a two main body portions 301a, 301b. The connection portion 303a is shown. The physical connection points between the tooth portion and one of the main body portions 301a is shown in close up. In examples, there may be a slight gap 305 between the main body portion 301a and the tooth portion 302. This has been found to be highly effective at providing good structural location of the tooth portion and the main body portion as well as allowing high thermal heat transfer. The slight gap 305 has been shown to increase the ease of arranging the main body portion into the tooth portion. In an example where there is no gap in the joint, the tip could contact before the main surfaces either side contact one another. In this way, the tooth may wobble under electromagnetic forces during operation. Therefore machining a gap in the design can provide numerous advantages. Other aspects that are positively impacted include the restoration of a desirable tooth lateral stiffness within the assembly while controlling stress concentration and fatigue issues at the notches. As such, in examples there may be a gap 305 between the tooth portion 302 and the body portion. Also shown in Figure 9 is a cooling source 200. The cooling source 200 is shrunk fit onto the outer side of the stator. The cooling source 200 may be a water jacket or the like.

The examples herein may further comprise a compressive element to provide compression to the stator elements. This may improve the robustness of the connection between the tooth portions and the main body portions. In turn, this improves the thermal transfer from these portions to the cooling source that in examples surrounds the stator. The compressive element may provide an evenly distributed contact force on all segments and segment joints within the stator. The compressive element may be any of the examples discussed above alongside e.g. a shrink fit ring that comprises cooling channels to provide a cooling fluid. The element may be a carbon fibre bandage wrapped progressively under tension.

The distributed contact force along the circumference of the stator results in a symmetrical, radially converging force field; as adjacent segments are circumferentially pushed towards one another, the segments exert an equal and opposite force on one another, both of which are substantially perpendicular to the radially inward force. When this is extrapolated over the numerous adjacent segments, it can be understood that a "squeezing" force exists over the full (typically circular) stator. The squeezing force assists in maintaining the stator in a robust and reliable arrangement with each segment held in place by the connection portion and the relative forces between the segments stemming from the compressive element (or elements).

The circumferential contact force may be exerted by a compression ring placed around the outer radial extremities of the stator. The force may be generated through an interference fit between the compression ring and assembled stator. The inner diameter of the compression ring is slightly smaller than the outer diameter of the stator segments (the diameters of the stator segments as discussed above are preferentially highly homogeneous). The compression ring may be fitted by heating it such that it expands and then placed over the assembled segments. When the compression ring cools, it applies a radial force inwards which generates the circumferential contact force. Alternatively, the circumferential contact force may be provided by a clamping mechanism or the like. For each (infinitesimal) contact point about the circumference of the stator, the circumferential contact force will generate a friction force that is in a tangential direction from the circumference. This friction force is a result of the torque generated by the stator windings in operation, wherein the friction force is equal and opposite to the force vector of the generated torque. In other words, the torque generated by the stator windings is transferred from the stator to an external anchor, e.g. motor housing, by means of the friction force. The exploitation of tangential compression forces in the present invention removes a need for tensile-force-resisting and/or shear-force-resisting joints.

As mentioned above, during formation of the stator, unlike more conventional I-shaped segments, the armature coil can be wound entirely separate to the tooth segments and then combined with the tooth segments immediately prior to joining the tooth segments with the back-iron segments.

A manufacturing and assembly process is outlined in the steps below:
1. Coils are assembled on to stator teeth sections.
2. Stator teeth with coils and back iron segments assembled to form complete stator.
3. Compression element inserted over assembled stator sections generating interference fit between compression element and stator segments, generating radial force and hoop stress such that segments are held in place.

The magnitude of the radial force generated is related to the level of interference between the stator assembly and compression ring, and the stiffness of the compression ring. The level of interference may be calculated carefully to provide a sufficient radial force is generated to hold the segment pieces in place, and also to transmit the torque from the stator iron into the compression ring without slipping. The radial force is preferentially not so high that deformation, warping or the like occurs.

Further examples of feature combinations taught by the present disclosure are set out in the following first set of numbered clauses:
1. A repeatable unit for a segmented stator for an electric machine, the unit comprising:
   a back-iron stator segment;
   a stator tooth segment comprising a top portion, a main body portion and a base portion; and
   a connection portion for connecting the back-iron stator segment to the stator tooth segment,
   wherein the base portion of the stator tooth segment has a width that is greater than a width of the top portion and the width of the main body portion,
   wherein, in use, a furthest radial distance of the back-iron stator segment is broadly the same as a furthest radial distance for the stator tooth segment.
2. A repeatable unit according to clause 1, wherein the connection portion is arranged towards a radially distal end of the stator tooth segment.
3. A repeatable unit according to clause 1 or 2, wherein the connection portion is arranged broadly along a radial direction.
4. A repeatable unit according to any of clauses 1-3, wherein:
   the back-iron stator segment comprises at least one of a projection and a recess; and,
   the stator tooth segment comprises at least one of a recess and a projection,
   and wherein the connection portion is formed from at least one of:
      a projection of the back-iron stator segment and a corresponding recess of the stator tooth segment; and,
      a recess of the back-iron stator segment and a corresponding projection of the stator tooth segment.
5. A repeatable unit according to clause 4, wherein the at least one projection projects broadly along a circumferential axis of the segmented stator.
6. A repeatable unit according to clause 4 or 5, wherein the at least one recess is arranged broadly along a circumferential axis of the segmented stator.
7. A repeatable unit according to any of clauses 1-6, further comprising a stator coil arranged around the main body portion of the stator tooth segment,
   wherein the stator coil is pre-formed and arranged onto the stator tooth segment from the top portion to the main body portion.
8. A repeatable unit according to any of clauses 1-7, wherein the back-iron stator segment and the stator tooth segment are made of laminated metal.
9. A repeatable unit according to any of clauses 1-8, wherein the back-iron stator segment and the stator tooth segment are made of at least one of steel and a metal containing silicon.
10. A segmented stator for an electric machine, the segmented stator comprising:
   a plurality of repeatable units according to any of clauses 1-9,
   wherein the repeatable units are arranged such that back-iron stator segments and tooth segments alternate around a circumference of the segmented stator.
11. A segmented stator according to clause 10, further comprising compression means, wherein the compression means is arranged around a radially outer surface of the plurality of repeatable units to provide a compressive force to the plurality of repeatable units.
12. A segmented stator according to clause 11, wherein the compressive force is an inwardly-directed compressive force.
13. A segmented stator according to clause 11 or 12, wherein the compression means comprises at least one of a compression ring and a clamping means.
14. A segmented stator according to any of clauses 10-13, wherein in use the stator is arranged to operate in substantially a vacuum.
15. A method of manufacturing a segmented stator for use in an electric machine, comprising:
   preforming at least one coil for use in the segmented stator;
   positioning at least one coil onto at least one stator tooth segment;
   securing the at least one stator tooth segment to a corresponding at least one back-iron stator segment via a connection portion to form a repeatable unit; and,
   joining a plurality of repeatable units to form a segmented stator.
16. A method of manufacturing a segmented stator according to clause 15, further comprising:
   positioning a cooling source around an outer circumference of the segmented stator to provide cooling to the plurality of repeatable units.
17. A method of manufacturing a segmented stator according to clause 15 or 16, further comprising:
   positioning compression means around an outer circumference of the segmented stator to provide an inward compression to the plurality of repeatable units.

Further examples of feature combinations taught by the present disclosure are set out in the following second set of numbered clauses:
1. A segmented stator for an electric machine, the segmented stator comprising:
   a plurality of back-iron stator segments; and
   a plurality of stator tooth segments,
   wherein the plurality of back-iron stator segments are joined with the plurality of stator tooth segments such the back-iron stator segments and the stator tooth segments alternate along the outer circumference of the segmented stator.

Further examples of feature combinations taught by the present disclosure are set out in the following third set of numbered clauses:
1. A segmented stator for an electric machine, the segmented stator comprising:
   a plurality of back-iron stator segments; and
   a plurality of stator tooth segments,
   wherein the plurality of back-iron stator segments and the plurality of stator tooth segments are arranged to alternate along the outer circumference of the segmented stator.
2. A segmented stator according to clause 1, further comprising:
   a compression means, wherein the compression means is arranged to provide a circumferentially distributed compression/radial force to the segmented stator.
3. A segmented stator according to clause 2, wherein the circumferentially distributed compression/radial force is a continuously-circumferential contact force provided along the outer circumference of the segmented stator, such that the continuously-circumferential contact force is uniformly distributed along the outer circumference of the segmented stator].
4. A segmented stator according to clause 3, wherein the compression means is a compression ring arranged around to provide the continuously-circumferential contact force.
5. A segmented stator according to clause 2, wherein the circumferentially distributed compression/radial force is a plurality of discrete contact forces provided evenly and symmetrically along the outer circumference of the segmented stator, such that the net vector of the discrete contact forces is zero.
6. A segmented stator according to clause 2, wherein the compression means is a clamping means arranged around to provide the plurality of discrete contact forces.
7. A segmented stator according to any of the preceding clauses, wherein the back-iron stator segments and the stator tooth segments further comprise a joining means, the joining means comprising one of at least:
   i) a pair of dowel flanges arranged at circumferentially distal end of the ...

Further examples of feature combinations taught by the present disclosure are set out in the following fourth set of numbered clauses:
1. A segmented stator for an electric machine, the segmented stator comprising:
   a plurality of back-iron stator segments, the each back-iron stator segment comprising an outer circumferential portion; and
   a plurality of stator tooth segments, the each stator tooth segment comprising an outer circumferential portion and a tooth portion, wherein the tooth portion is arranged radially inwards from the respective outer circumferential portion,
   wherein each of the outer circumferential portions are arranged to form an outer circumference of the segmented stator, such that the plurality back-iron stator segments and the plurality of stator tooth segments alternate along the outer circumference.
2. A segmented stator according to clause 1, wherein the outer circumferential portions further comprise a joining means arranged at circumferentially distal ends of the outer circumferential portions, wherein adjacent back-iron stator segments and stator tooth segments are secured to one another by the respective joining means.
3. A segmented stator according to clause 2, wherein the joining means comprises one of at least:
   i) a pair of dowel flanges each arranged at circumferentially distal ends of the outer circumferential portions of the back-iron stator segments, and a pair of dowel-receiving portions each arranged at circumferentially distal ends of the outer circumferential portions of the stator tooth segments;
   ii) a pair of dowel flanges each arranged at circumferentially distal ends of the outer circumferential portions of the stator tooth segments, and a pair of dowel-receiving portions each arranged at circumferentially distal ends of the outer circumferential portions of the back-iron stator segments; and
   iii) a dowel flange and a dowel-receiving portion each arranged at circumferentially distal ends of the outer circumferential portions of both of the back-iron stator segments and the stator tooth segments, and
   wherein adjacent back-iron stator segments and stator tooth segments are secured to one another by placing the dowel flanges into the respective dowel-receiving portions.
4. A segmented stator according to clause 4, wherein the dowel flange comprises a tenon and the dowel-receiving portion comprises a mortise, and
   wherein the mortise is arranged to circumferentially receive the tenon.
   The mortise and tenon may have an "open-face cross-section" such that the mortise receives the tenon in a circumferential direction. The open-face cross-section may be segment of a circle (as defined by a chord of the circle), an isosceles triangle, an isosceles trapezoid, a square, or a rectangle; alternatively, the joining means may be a butt joint (i.e. flat faced).
5. A segmented stator according to any of the preceding clause, further comprising:
   a compression means, wherein the compression means is arranged to provide a circumferentially distributed compression/radial force to the segmented stator.
6. A segmented stator according to clause 5, wherein the circumferentially distributed compression/radial force is a continuously-circumferential contact force provided along the outer circumference of the segmented stator, such that the continuously-circumferential contact force is uniformly distributed along the outer circumference of the segmented stator.
7. A segmented stator according to clause 6, wherein the compression means is a compression ring arranged around the outer circumference of the segmented stator to provide the continuously-circumferential contact force.
8. A segmented stator according to clause 5, wherein the circumferentially distributed compression/radial force is a plurality of discrete contact forces provided evenly and symmetrically along the outer circumference of the segmented stator, such that the net vector of the discrete contact forces is zero.
9. A segmented stator according to clause 8, wherein the compression means is a clamping means arranged around the outer circumference of the segmented stator to provide the plurality of discrete contact forces.
10. A segmented stator according to any of the preceding clauses, wherein the back-iron stator segments and the stator tooth segments are made of laminated metal.
11. A segmented stator according to any of the preceding clauses, wherein the back-iron stator segments and the stator tooth segments are made of steel or a metal containing silicon.
12. A segmented stator according to any of the preceding clauses, wherein the segmented stator is arranged in a vacuum.
13. A segmented stator according to clause 12, wherein the segmented stator further comprises a plurality of stator coils, wherein the each stator coil is arranged around the tooth portion of each stator tooth segment.

Further examples of feature combinations taught by the present disclosure are set out in the following fifth set of numbered clauses:
1. A segmented stator for an electric machine, the segmented stator comprising:
   a plurality of back-iron stator segments;
   a plurality of stator tooth segments; and
   a compression means,
   wherein the plurality back-iron stator segments and the plurality of stator tooth segments are arranged to alternate along the outer circumference of the segmented stator, and
   wherein the compression means is arranged to provide a circumferentially distributed compression/radial force to the segmented stator.

## Claims

1. A repeatable unit for a segmented stator for an electric machine, the unit comprising:
a back-iron stator segment;
a stator tooth segment comprising a top portion, a main body portion and a base portion; and
a connection portion for connecting the back-iron stator segment to the stator tooth segment,
wherein the base portion of the stator tooth segment has a width that is greater than a width of the top portion and the width of the main body portion,
wherein, in use, a furthest radial distance of the back-iron stator segment is broadly the same as a furthest radial distance for the stator tooth segment.

2. A repeatable unit according to claim 1, wherein the connection portion is arranged towards a radially distal end of the stator tooth segment.

3. A repeatable unit according to claim 1 or 2, wherein the connection portion is arranged broadly along a radial direction.

4. A repeatable unit according to any of claims 1-3, wherein:
the back-iron stator segment comprises at least one of a projection and a recess; and,
the stator tooth segment comprises at least one of a recess and a projection,
and wherein the connection portion is formed from at least one of:
a projection of the back-iron stator segment and a corresponding recess of the stator tooth segment; and,
a recess of the back-iron stator segment and a corresponding projection of the stator tooth segment.

5. A repeatable unit according to claim 4, wherein the at least one projection projects broadly along a circumferential axis of the segmented stator.

6. A repeatable unit according to claim 4 or 5, wherein the at least one recess is arranged broadly along a circumferential axis of the segmented stator.

7. A repeatable unit according to any of claims 1-6, further comprising a stator coil arranged around the main body portion of the stator tooth segment,
wherein the stator coil is pre-formed and arranged onto the stator tooth segment from the top portion to the main body portion.

8. A repeatable unit according to any of claims 1-7, wherein the back-iron stator segment and the stator tooth segment are made of laminated metal.

9. A repeatable unit according to any of claims 1-8, wherein the back-iron stator segment and the stator tooth segment are made of at least one of steel and a metal containing silicon.

10. A segmented stator for an electric machine, the segmented stator comprising:
a plurality of repeatable units according to any of claims 1-9,
wherein the repeatable units are arranged such that back-iron stator segments and tooth segments alternate around a circumference of the segmented stator.

11. A segmented stator according to claim 10, further comprising compression means, wherein the compression means is arranged around a radially outer surface of the plurality of repeatable units to provide a compressive force to the plurality of repeatable units.

12. A segmented stator according to claim 11, wherein the compressive force is an inwardly-directed compressive force.

13. A segmented stator according to claim 11 or 12, wherein the compression means comprises at least one of a compression ring and a clamping means.

14. A segmented stator according to any of claims 10-13, wherein in use the stator is arranged to operate in substantially a vacuum.

15. A method of manufacturing a segmented stator for use in an electric machine, comprising:
preforming at least one coil for use in the segmented stator;
positioning at least one coil onto at least one stator tooth segment;
securing the at least one stator tooth segment to a corresponding at least one back-iron stator segment via a connection portion to form a repeatable unit; and,
joining a plurality of repeatable units to form a segmented stator.

16. A method of manufacturing a segmented stator according to claim 15, further comprising:
positioning a cooling source around an outer circumference of the segmented stator to provide cooling to the plurality of repeatable units.

17. A method of manufacturing a segmented stator according to claim 15 or 16, further comprising:
positioning compression means around an outer circumference of the segmented stator to provide an inward compression to the plurality of repeatable units.
